# EUROPÄISCHE PATENTANMELDUNG

(11) **EP 1 643 739 A1**
(43) Veröffentlichungstag der Anmeldung: **05.04.2006**
(21) Anmeldenummer: 04292352.4
(22) Anmeldetag: 04.10.2004
(51) Int. Cl.: H04M 3/42

(54) **Telekommunikationsnetz und Dienstrechner sowie Verfahren zum Austausch von Nachrichten zwischen einem Endteilnehmer und einem Textnachrichten-Server**

(71) Anmelder: ALCATEL, 75008 Paris (FR)
(72) Erfinder: Satzke, Klaus, 71732 Tamm (DE); Laible, Volker, 70469 Stuttgart (DE); Wahl, Stefan, 71701 Schwieberdingen (DE)
(74) Vertreter: Brose, Gerhard

(57) **Zusammenfassung**

Die Erfindung betrifft ein Verfahren zum Austausch von Nachrichten zwischen einem Endteilnehmer und einem Textnachrichten-Server in einem Telekommunikationsnetz über ein auch herkömmliches Telefongerät (TG), das über ein Gateway mit Browser (GB), welches Mittel zur Spracherkennung und zur Umwandlung von Text in Sprache aufweist, und einen Diensterechner (DR) mit dem Textnachrichten-Server verbunden ist, wobei das Gateway mit Browser (GB) gemäß den durch Sprache und/oder über die Tastatur des Telefongeräts (TG) gegebenen Anweisungen des Endteilnehmers den Diensterechner (DR) kontaktiert und ein elektronisches Dokument von dort herunterlädt, das Gateway mit Browser (GB) mittels des elektronischen Dokuments Hinweise, Anweisungen, und/oder Textnachrichten von Text in Sprache umwandelt und am Telefongerät (TG) ausgibt, das Gateway mit Browser (GB) Anweisungen und/oder Nachrichten empfängt, die der Endteilnehmer durch Sprache und/oder über die Tastatur des Telefongeräts (TG) eingegeben hat, wobei Sprachnachrichten im Gateway mit Browser (GB) in Textnachrichten umgewandelt werden, sowie ein Telekommunikationsnetz und einen Diensterechner hierfür.

## Beschreibung

Die Erfindung betrifft ein Verfahren zum Austausch von Nachrichten zwischen einem Endteilnehmer und einem Textnachrichten-Server nach dem Oberbegriff des Anspruchs 1, ein Telekommunikationsnetz nach dem Oberbegriff des Anspruchs 6 sowie einen Diensterechner nach dem Oberbegriff des Anspruchs 8.

Als neue Form der Kommunikation über das Internet mit der Möglichkeit einer sehr schnellen Antwort auf Nachrichten hat sich in den letzten Jahren das sogenannte Instant Messaging (IM) etabliert, bei dem zwischen Endteilnehmern, die gerade im Instant Messaging System angemeldet sind, Instant Messages, d.h. Textnachrichten, im einfachsten Fall nur durch einmaliges Klicken mit einer Maus verschickt werden können. Zudem wurde unter dem Namen Push-To-Talk (PTT) eine Kommunikationsarchitektur eingeführt, bei der nur durch Drücken einer Taste eines PTT-tauglichen Telefons sehr schnell mit einem oder mehreren anderen Endteilnehmern, die auf einer sogenannten Buddy-Liste eingetragen sind, kommuniziert werden kann, ohne daß der Angerufene das Gespräch explizit annehmen muß. Auf der anderen Seite hat auch die Nutzung von Sprachdiensten rasant zugenommen, die z.B. auf der sogenannten Voice eXtensible Markup Language (VoiceXML) basieren und bei denen z.B. E-Mails oder Short Message Services (SMS) von einem speziellen Gateway mit Browser in Sprache umgewandelt und dem Endteilnehmer über ein beliebiges Telefongerät vorgelesen werden.

Bis zum heutigen Tag gibt es allerdings keine Schnittstelle zwischen Instant Messaging Systemen und dem sogenannten Plain Old Telephone System (POTS), bei dem ausschließlich analoge Telefongeräte verwendet werden, d.h. daß Endteilnehmer mit einem POTS-Telefon momentan keine Möglichkeit haben, sich Instant Messages als Sprachnachricht zuschicken zu lassen. Ferner ist in der Architektur von VoiceXML bis zum jetzigen Zeitpunkt nicht vorgesehen, Sprache direkt in Text umzuwandeln, was bei einer evt. zukünftigen Verwendung von VoiceXML in Verbindung mit Instant Messages die Möglichkeit der Beantwortung von Instant Messages mittels Sprache stark einschränken würde.

Der Erfindung liegt die Aufgabe zugrunde, an der oben beschriebenen Situation Abhilfe zu schaffen.

Diese Aufgabe wird erfindungsgemäß gelöst durch ein Verfahren zum Austausch von Nachrichten zwischen einem Endteilnehmer und einem Textnachrichten-Server nach der Lehre des Anspruchs 1, ein Telekommunikationsnetz nach der Lehre des Anspruchs 6 und einem Diensterechner nach der Lehre des Anspruchs 8.

Die Erfindung basiert auf der Idee, daß Instant Messages Server verschiedener Anbieter, wie z.B. MSN, Yahoo oder AOL mit einem Diensterechner verbunden sind, der wiederum über ein Gateway mit Browser, das mit der Fähigkeit der Spracherkennung und der Umwandlung von Text in Sprache ausgestattet ist, über ein Telekommunikationsnetz mit einem Telefongerät, insbesondere mit einem POTS-Telefon, verbunden ist. Die Instant Messages Server können an den Diensterechner Instant Messages schicken bzw. von diesem Instant Messages empfangen. Der Diensterechner generiert elektronische Dokumente, in denen die empfangenen Instant Messages integriert sind, und das Gateway mit Browser kann diese elektronischen Dokumente herunterladen. Die elektronischen Dokumente enthalten zudem Anweisungen und Hinweise in einer solchen Form, die das Gateway mit Browser interpretieren kann, und mit deren Hilfe es die Instant Messages von Text in Sprache umwandeln kann und diese umgewandelten Nachrichten zusammen mit Anweisungen und Hinweisen als Sprache an einem beliebigen Telefongerät ausgeben kann. Dadurch kann der Endteilnehmer, der ein POTS-Telefon verwendet, dieses weiterhin verwenden und muß nicht ein anderes Telefongerät erwerben und dessen Funktionsweise erlernen. Der Endteilnehmer kann auf die Sprachnachrichten und Anweisungen antworten, indem er mittels eines sprachgeführten Menüs vordefinierte Antworten oder Anweisungen durch Tastendruck oder Sprache auswählt oder indem er eine beliebige Sprachnachricht als Antwort auf eine Instant Message eingibt. Im Gateway mit Browser werden anschließend zum einen Sprachnachrichten in Text umgewandelt und zum anderen Anweisungen ausgewertet, und anschließend werden die Textnachrichten und die ausgewerteten Anweisungen an den Diensterechner und evt. weiter an den entsprechenden Instant Messages Server geschickt. Ein sogenannter Presence-Server, in dem der Status der einzelnen Endteilnehmer am Instant Messages Service gespeichert ist, wie z.B. ob der Endteilnehmer gerade online ist oder nicht, kann mit dem Diensterechner verbunden sein und die Informationen über den Status ausgewählter Endteilnehmer, die auf einer Buddy-Liste eingetragen sind, können an die einzelnen Endteilnehmer geschickt werden.

Weiter Ausgestaltungen der Erfindung sind den Unteransprüchen und der nachfolgenden Beschreibung zu entnehmen.

Im folgenden wird die Erfindung unter Zuhilfenahme der beiliegenden Zeichnung weiter erläutert.

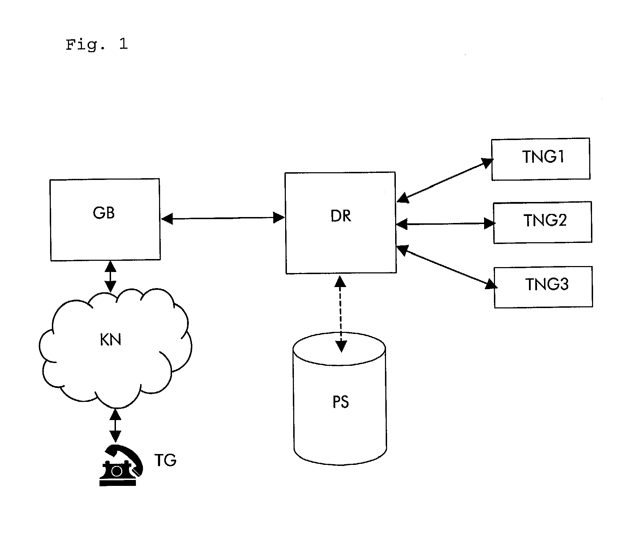

Figur 1 zeigt eine beispielhafte Netzwerkumgebung, in der die Erfindung implementiert ist.

Das in Figur 1 dargestellte erfindungsgemäße Telekommunikationsnetz beinhaltet Telefongeräte TG, wobei in Figur 1 exemplarisch nur ein Telefongerät TG dargestellt ist, ein Gateway mit Browser GB, einen Diensterechner DR, Textnachrichten-Gateways TNG1-TNG3, wobei in Figur 1 wiederum exemplarisch drei dargestellt sind, sowie einen Presence Server PS.

Die Telefongeräte TG sind über bidirektionale Festnetz- oder Mobilverbindungen KN, wie z.B. POTS oder Global System for Mobile Communication (GSM), die Netzwerkknoten, wie z.B. Access Points, Router oder Switches beinhalten, mit dem Gateway mit Browser GB verbunden. Das Gateway mit Browser GB wiederum weist eine bidirektionale Kommunikationsverbindung z.B. über das Internet mit dem Diensterechner DR auf. Der Diensterechner DR ist über bidirektionale Kommunikationsverbindungen wie z.B. das Internet mit den verschiedenen Textnachrichten-Gateways TNG1-TNG3 verbunden. Die weiterführenden Verbindungen der Textnachrichten-Gateways TNG1-TNG3 zu den jeweils zugehörigen Textnachrichten-Servern sind in Figur 1 nicht dargestellt.

Im angeführten Beispiel ist der Diensterechner DR noch zusätzlich mit dem Presence Server PS über eine bidirektionale Kommunikationsverbindung wie z.B. das Internet verbunden, was allerdings nur eine optionale Ausführungsform der Erfindung darstellt.

Die Telefongeräte TG können von beliebiger Art sein, wie z.B. ISDN-Telefone (ISDN = Integrated Services Digital Network), Mobil-Telefone oder insbesondere auch POTS-Telefone.

Das Gateway mit Browser GB weist Fähigkeiten zur Spracherkennung und zur Umwandlung von Text in Sprache und von Sprache in Text auf und kann mittels dieser Fähigkeiten elektronische Dokumente von Servern herunterladen und dem Endteilnehmer den Inhalt am Telefongerät TG als Sprache ausgeben, Sprach- und Textnachrichten empfangen, in Text bzw. Sprache umwandeln und versenden und Sprach- und/oder Textanweisungen empfangen und diese ausführen oder weiterleiten. Das Gateway mit Browser GB ist somit ähnlich einem VoiceXML-Gateway, wie z.B. von VoiceGenie oder Tellme angeboten, wobei allerdings die aktuelle VoiceXML-Version 2.0 die direkte Umsetzung von Sprache in Text nicht unterstützt.

Der erfindungsgemäße Diensterechner DR ist ein Rechner, der spezielle Funktionen erfüllt, die zum Erbringen des erfindungsgemäßen Verfahrens zum Austausch von Nachrichten erforderlich sind. Dazu weist der Diensterechner DR Mittel auf, um dem Gateway mit Browser GB elektronische Dokumente zum Herunterladen zur Verfügung zu stellen, mittels derer das Gateway mit Browser GB Hinweise, Anweisungen, und/oder Textnachrichten von Text in Sprache umwandelt und am Telefongerät TG ausgibt und um Hinweise, Anweisungen und/oder Textnachrichten zu empfangen, zu speichern und zu verschicken. Zudem kann der Diensterechner DR noch weitere Aufgaben erfüllen und so z.B. als Web-Server fungieren.

Im in Figur 1 dargestellten Beispiel weist der Diensterechner DR außerdem noch Mittel auf, um die Dienste für ein Telefongerät TG entsprechend den Kapazitäten des Telefongeräts TG und/oder dem Teilnehmerprofil des Endteilnehmers, der dem Telefongerät TG zugeordnet ist zu konfigurieren und/oder um Informationen über den Verbindungsstatus und/oder die Kapazitäten von Telefongeräten TG und/oder die Teilnehmerprofile von Endteilnehmern zu empfangen, zu speichern und zu verschicken. Dies stellt allerdings nur eine optionale Ausführungsform der Erfindung dar. Durch die Informationen über den Verbindungsstatus kann den Endteilnehmern z.B. mitgeteilt werden, welche anderen Endteilnehmer einer vorher festgelegten Gruppe gerade online sind und somit für den Nachrichtenaustausch zur Verfügung stehen, wohingegen die Informationen über die Kapazitäten der Telefongeräte TG benutzt werden können, um geeignete Dienste je nach den technischen Gegebenheiten der Telefongeräte TG anbieten zu können, wie z.B. die Möglichkeit der Texteingabe bei Telefongeräten TG, die nicht zur Gruppe der POTS-Telefone gehören. Die Informationen über die Teilnehmerprofile von Endteilnehmern schließlich werden vom Diensterechner DR dazu verwendet, die Dienste für die einzelnen Endteilnehmer entsprechend ihrer vorgegebenen Wünsche zu konfigurieren. Beispielsweise kann ein Endteilnehmer festlegen, daß er auf seinem POTS-Telefon nur Nachrichten von ausgewählten weiteren Endteilnehmern erhalten will.

Die Textnachrichten-Gateways TNG1-TNG3 führen z.B. die Anpassung oder Übersetzung zwischen den Protokollen, die von Textnachrichten-Servern verwendet werden, wie z.B. ICQ oder AIM, und den Protokollen in öffentlichen Netzen durch und können zusätzlich noch Aufgaben wie z.B. die eines Routers übernehmen. Auf diese Weise wird mittels der Textnachrichten-Gateways TNG1-TNG3 die Verbindung zwischen dem Diensterechner DR zu den jeweils zugehörigen Textnachrichten-Servern hergestellt.

Der Presence-Server PS kann sowohl Informationen über den Verbindungsstatus der einzelnen Telefongeräte TG, als auch Informationen über die Kapazitäten der einzelnen Telefongeräte TG und über die Teilnehmerprofile der Endteilnehmer, die den einzelnen Telefongeräten TG zugeordnet sind, speichern, aktualisieren, senden und empfangen.

Anhand von Figur 1 wird nun im folgenden das erfindungsgemäße Verfahren beispielhaft erläutert. Mittels des Telefongeräts TG kann ein Endteilnehmer durch Wählen einer speziellen Telefonnummer die Verbindung zu dem Gateway mit Browser GB herstellen. Der Gateway mit Browser GB schickt eine Anweisung zur Übermittlung von Informationen über die gewünschte Verbindung an das Telefongerät TG mittels Sprache und/oder Text. Daraufhin gibt der Endteilnehmer über die Tastatur und/oder durch Sprache am Telefongerät TG ein, mit welchem Textnachrichten-Server er verbunden werden möchte und übermittelt zudem noch das Paßwort, mit dem sein Zugang zu den für ihn bestimmten Textnachrichten geschützt ist.

Gemäß den Anweisungen des Endteilnehmers schickt das Gateway mit Browser GB an den Diensterechner DR die Anweisung, mit dem gewünschten Textnachrichten-Server in Kontakt zu treten zusammen mit dem Paßwort. Der Diensterechner DR leitet die Anweisung mit Paßwort anschließend über das entsprechende Textnachrichten-Gateway an den gewünschten Textnachrichten-Server. Dieser wiederum sendet nach positiver Identifikation des Endteilnehmers von nun an die von anderen Endteilnehmern erhaltenen und an den Endteilnehmer adressierten Textnachrichten an den Diensterechner DR.

Nach positiver Identifikation wird zudem vom Diensterechner DR aus die Information, daß der Endteilnehmer online ist, an den Presence Server PS geschickt und dort auch gespeichert. Der Presence Server PS sendet außerdem sowohl Informationen darüber, welche der sich auf der Buddy-Liste des Endteilnehmers befindenden weiteren Endteilnehmer momentan gerade online sind, als auch Informationen über die Kapazitäten des Telefongeräts TG des Endteilnehmers und dessen Teilnehmerprofil an den Diensterechner DR.

Die Dienste für das Telefongerät TG werden entsprechend den Informationen über die Kapazitäten des Telefongeräts TG im Diensterechner DR konfiguriert. Beispielsweise wird dadurch POTS-Telefonen kein Dienst angeboten, der die Eingabe von Text erfordert.

Der Endteilnehmer kann zudem sein Teilnehmerprofil, das im Presence Server PS gespeichert werden kann, konfigurieren, z.B. indem er über das Gateway mit Browser GB und den Diensterechner DR an den Presence Server PS übermittelt, daß er in Abhängigkeit von der Kapazität des genutzten Telefongeräts TG nur Nachrichten von ausgewählten weiteren Endteilnehmern erhalten will. Der Diensterechner DR wird in diesem Fall die vom Presence Server PS übermittelten Informationen über die Kapazität und das Teilnehmerprofil, die dem genutzten Telefongerät TG zugeordnet sind, dazu verwenden, nur Nachrichten von diesen ausgewählten weiteren Endteilnehmern an den Endteilnehmer weiterzuleiten.

Der Diensterechner DR generiert nun elektronische Dokumente, in denen zum einen die empfangenen Textnachrichten und zum anderen Anweisungen und Hinweise, die z.B. den Verbindungsstatus von Endteilnehmer der Buddy-Liste betreffen, integriert sind, und diese elektronischen Dokumente werden anschließend an das Gateway mit Browser GB übermittelt.

Im Gateway mit Browser GB werden die vom Diensterechner DR erhaltenen elektronischen Dokumente vom Browser interpretiert, und der Browser extrahiert Hinweise und Anweisungen, die für den Endteilnehmer bestimmt sind und gibt diese mittels Sprache und/oder Text am Telefongerät TG aus. Beispielsweise werden dem Endteilnehmer die Namen derjenigen weiteren Endteilnehmer durch Sprache übermittelt, die gerade online sind und damit zur Kommunikation zur Verfügung stehen. Auch werden z.B. alle im Gateway mit Browser GB ankommenden Textnachrichten von Text in Sprache konvertiert und dem Endteilnehmer über das Telefongerät TG vorgelesen.

Der Endteilnehmer kann je nach Kapazität des Telefongeräts TG durch Sprache und/oder Texteingabe an der Tastatur des Telefongeräts TG auf Anweisungen und/oder Textnachrichten antworten. Dabei kann der Endteilnehmer die Antworten frei formuliert und damit formlos eingeben und kann dazu je nach Kapazität des Telefongeräts TG die Funktionalität von Wörterbüchern nutzen, die entweder im Telefongerät TG selbst oder auch im Telekommunikationsnetz implementiert ist. Alternativ dazu kann der Endteilnehmer aus einer Menge von vordefinierten Nachrichten, die z.B. im übermittelten elektronischen Dokument enthalten sind, auswählen und dadurch auf Anweisungen reagieren oder auf Textnachrichten antworten.

Das Gateway mit Browser GB transformiert die vom Telefongerät TG erhaltenen Sprachnachrichten in Text, formatiert ggf. Anweisungen und Nachrichten um, und leitet diese an den Diensterechner DR weiter.

Im Diensterechner DR werden die vom Gateway mit Browser GB erhaltenen Anweisungen ausgewertet und ausgeführt oder an den vorgesehenen Empfänger, wie z.B. den Presence Server PS oder einen Textnachrichten-Server, weitergeleitet. Die vom Gateway mit Browser GB erhaltenen Textnachrichten werden über das entsprechende Textnachrichten-Gateway an den adressierten Textnachrichten-Server geschickt.

Sollte für die Übermittlung von Textnachrichten eine geringere Sicherheitsstufe genügen, so kann optional auf die Verwendung eines Paßworts zur Identifikation des Endteilnehmers verzichtet werden, d.h. die Kenntnis der Telefonnummer würde in einem solchen Fall ausreichen. Es ist noch nicht einmal unbedingt erforderlich, daß der Endteilnehmer als Nutzer eines IM-Dienstes registriert ist, um Nachrichten zu empfangen, sondern dies ist nur notwendig, um Nachrichten auch verschicken zu können.

Für den Fall, daß für die Übermittlung von Textnachrichten eine höhere Sicherheitsstufe angebracht ist, z.B. wenn mit einem Telefongerät TG mehrere Endteilnehmer erreichbar sind, kann vor der Übermittlung jeder einzelnen Textnachricht die Eingabe eines Paßworts am Telefongerät TG zur Identifikation des Endteilnehmers verlangt werden und nach einer positiven Identifikation wird die Textnachricht übermittelt. Falls der Endteilnehmer nicht als Adressat der Textnachricht identifiziert werden konnte, kann optional noch an das Telefongerät TG eine Anweisung geschickt und dort ausgegeben werden, durch die der Adressat der Textnachricht an das Telefongerät TG gebeten wird.

Alternativ zur Identifikation des Endteilnehmers durch ein Paßwort können hierfür auch beliebige andere Verfahren, wie z.B. biometrische Verfahren zur Stimmerkennung o.ä. eingesetzt werden.

## Patentansprüche

1. Verfahren zum Austausch von Nachrichten zwischen einem Endteilnehmer und einem Textnachrichten-Server in einem Telekommunikationsnetz über ein auch herkömmliches Telefongerät (TG), das über ein Gateway mit Browser (GB), welches Mittel zur Spracherkennung und zur Umwandlung von Text in Sprache aufweist, und einen Diensterechner (DR) mit dem Textnachrichten-Server verbunden ist, **dadurch gekennzeichnet, daß** das Gateway mit Browser (GB) gemäß den durch Sprache und/oder über die Tastatur des Telefongeräts (TG) gegebenen Anweisungen des Endteilnehmers den Diensterechner (DR) kontaktiert und ein elektronisches Dokument von dort herunterlädt, daß das Gateway mit Browser (GB) mittels des elektronischen Dokuments Hinweise, Anweisungen, und/oder Textnachrichten von Text in Sprache umwandelt und am Telefongerät (TG) ausgibt, daß das Gateway mit Browser (GB) Anweisungen und/oder Nachrichten empfängt, die der Endteilnehmer durch Sprache und/oder über die Tastatur des Telefongeräts (TG) eingegeben hat, wobei Sprachnachrichten im Gateway mit Browser (GB) in Textnachrichten umgewandelt werden, daß diese Anweisungen und/oder Textnachrichten an den Diensterechner (DR) und/oder den Textnachrichten-Server weitergeschickt werden und daß vom Textnachrichten-Server aus Hinweise, Anweisungen und/oder Textnachrichten für diesen Endteilnehmer an den Diensterechner (DR) und/oder über das Gateway mit Browser (GB) an das Telefongerät (TG) geschickt werden.

2. Verfahren nach Anspruch 1, **dadurch gekennzeichnet, daß** der Endteilnehmer durch ein Paßwort und/oder ein biometrisches Verfahren identifiziert wird, bevor Textnachrichten an das Telefongerät (TG) geschickt werden.

3. Verfahren nach Anspruch 1, **dadurch gekennzeichnet, daß** ein Presence Server (PS), der mit dem Diensterechner (DR) verbunden ist, den Verbindungsstatus und/oder die Kapazitäten von weiteren Telefongeräten (TG) und/oder die Teilnehmerprofile von weiteren Endteilnehmern an den Diensterechner (DR) übermittelt.

4. Verfahren nach Anspruch 3, **dadurch gekennzeichnet, daß** der Verbindungsstatus und/oder die Kapazitäten von Telefongeräten (TG) von ausgewählten Endteilnehmern und/oder die Teilnehmerprofile von ausgewählten Endteilnehmern vom Diensterechner (DR) an das Telefongerät (TG) des Endteilnehmers gesendet werden.

5. Verfahren nach Anspruch 3, **dadurch gekennzeichnet, daß** der Diensterechner (DR) die Dienste für das Telefongerät (TG) entsprechend den Kapazitäten des Telefongeräts (TG) und/oder dem Teilnehmerprofil des Endteilnehmers, der dem Telefongerät (TG) zugeordnet ist, konfiguriert.

6. Telekommunikationsnetz zum Durchführen eines Verfahrens zum Austausch von Nachrichten zwischen einem Endteilnehmer und einem Textnachrichten-Server über ein auch herkömmliches Telefongerät (TG), das über ein Gateway mit Browser (GB) mit dem Textnachrichten-Server verbunden ist, **dadurch gekennzeichnet, daß** sich zwischen dem Gateway mit Browser (GB) und dem Textnachrichten-Server ein Diensterechner (DR) befindet, der Mittel aufweist, um dem Gateway mit Browser (GB) elektronische Dokumente zum Herunterladen zur Verfügung zu stellen, mittels derer das Gateway mit Browser (GB) Hinweise, Anweisungen, und/oder Textnachrichten von Text in Sprache umwandelt und am Telefongerät (TG) ausgibt und um Hinweise, Anweisungen und/oder Textnachrichten zu verschicken, zu speichern und zu empfangen.

7. Telekommunikationsnetz nach Anspruch 6, **dadurch gekennzeichnet, daß** ein Presence Server (PS) mit dem Diensterechner (DR) verbunden ist, der Mittel aufweist, um den Verbindungsstatus und/oder die Kapazitäten von weiteren Telefongeräten (TG) und/oder die Teilnehmerprofile von weiteren Endteilnehmern an den Diensterechner (DR) zu übermitteln.

8. Diensterechner (DR) zur Durchführung eines Verfahrens zum Austausch von Nachrichten zwischen einem Endteilnehmer und einem Textnachrichten-Server über ein auch herkömmliches Telefongerät (TG), das über ein Gateway mit Browser (GB) und den Diensterechner (DR) mit dem Textnachrichten-Server verbunden ist, **dadurch gekennzeichnet, daß** der Diensterechner (DR) Mittel aufweist, um dem Gateway mit Browser (GB) elektronische Dokumente zum Herunterladen zur Verfügung zu stellen, mittels derer das Gateway mit Browser (GB) Hinweise, Anweisungen, und/oder Textnachrichten von Text in Sprache umwandelt und am Telefongerät (TG) ausgibt und um Hinweise, Anweisungen und/oder Textnachrichten zu empfangen, zu speichern und zu verschicken.

9. Diensterechner (DR) nach Anspruch 8, **dadurch gekennzeichnet, daß** der Diensterechner (DR) Mittel aufweist, um Informationen über den Verbindungsstatus und/oder die Kapazitäten von weiteren Telefongeräten (TG) und/oder die Teilnehmerprofile von weiteren Endteilnehmern zu empfangen, zu speichern und zu verschicken und/oder um die Dienste für das Telefongerät (TG) entsprechend den Kapazitäten des Telefongeräts (TG) und/oder dem Teilnehmerprofil des Endteilnehmers, der dem Telefongerät (TG) zugeordnet ist zu konfigurieren.
